# EUROPÄISCHE PATENTSCHRIFT

(11) **EP 1 419 065 B1**
(45) Veröffentlichungstag und Bekanntmachung des Hinweises auf die Patenterteilung: **20.06.2007**
(21) Anmeldenummer: 02774508.2
(22) Anmeldetag: 09.08.2002
(51) Int. Cl.: B60R 1/08, G02B 5/08, G02B 5/26

(54) **FAHRZEUGRÜCKSPIEGEL**
VEHICLE REAR-VIEW MIRROR
RETROVISEUR DE VEHICULE

(30) Priorität: 22.08.2001 DE 10141047
(43) Veröffentlichungstag der Anmeldung: 19.05.2004
(73) Patentinhaber: Bayerische Motoren Werke Aktiengesellschaft, 80809 München (DE); Piringer, Helmut, 85598 Baldham (DE)
(72) Erfinder: PIRINGER, Helmut, 85598 Baldham (DE); LAUX, Joseph, CH-8274 Ermatingen (CH); MEYR, Wolfgang, 80997 München (DE)
(74) Vertreter: Schernhammer, Herbert
(86) Internationale Anmeldenummer: PCT/EP2002/008936
(87) Internationale Veröffentlichungsnummer: WO 2003/018363

(56) Entgegenhaltungen:
- EP-A- 0 438 646
- EP-A- 0 999 574
- US-B1- 6 196 688
- PATENT ABSTRACTS OF JAPAN vol. 015, no. 055 (P-1164), 8. Februar 1991 (1991-02-08) & JP 02 285339 A (USHIO INC), 22. November 1990 (1990-11-22)

## Beschreibung

Die Erfindung betrifft einen Spiegel, insbesondere einen Fahrzeugrückspiegel, mit einer lichtdurchlässigen Filterschicht zur Ausfilterung störender Anteile des in die Filterschicht eintretenden Lichts im gelben Spektralbereich, nach dem Oberbegriff des Anspruchs 1 sowie ein zugehöriges Herstellungsverfahren.

Die spektrale Empfindlichkeit des menschlichen Auges, das heißt die Empfindlichkeit für Licht verschiedener Wellenlängen, hängt von der Strahlungsflußdichte des auf das Auge einfallenden Lichts ab. Bei geringen Strahlungsflußdichten (Nachtsehen) liegt das spektrale Maximum der Empfindlichkeitskurve bei kleineren Wellenlängen als bei Lichtverhältnissen während eines normalen hellen Tages (Tagsehen). Dennoch ist auch beim Nachtsehen das Auge empfindlich für Licht im gelben Spektralbereich.

Es ist bekannt, daß sich Licht im gelben Spektralbereich störend auf die visuelle Wahrnehmung auswirken kann. Dies gilt insbesondere für die visuelle Wahrnehmung von Fahrsituationen mit Hilfe eines Fahrzeugrückspiegels beim Fahren eines Kraftfahrzeuges während der Nacht oder bei ähnlichen Lichtverhältnissen.

Die gattungsbildende US 5,844,721 geht detailliert auf eine Erklärung dieses Phänomens ein. Die Schrift beschreibt weiterhin einen Rückspiegel mit einer lichtdurchlässigen Glasschicht, die zur Ausfilterung gelben Lichts Neodymoxid mit einem Gewichtsanteil von 5 bis 20 Prozent enthält. Die Dicke der Glasschicht beträgt 0,5 bis 4 mm. Gemäß US 5,844,721 können auf diese Weise 95 bis 98 Prozent des Lichts mit Wellenlängen zwischen 565 und 595 nm ausgefiltert werden, wenn die Glasschicht eine Dicke von 3,39 mm hat. Von der Spiegeloberfläche aus gesehen, an der das zu reflektierende Lichts auftrifft, ist hinter der Glasschicht eine Reflexionsschicht aus Silber zur Reflexion des auf den Spiegel aufgetroffenen und durch die Glasschicht hindurchgetretenen Lichts angeordnet.

Nachteilig an einem derartigen Spiegel ist die Dicke der Glasschicht von mindestens 0,5 mm. Insbesondere im Randbereich des Spiegels entstehen bei solchen Dicken unscharfe Konturen und/oder Doppelkonturen der Spiegelbilder. Weiterhin ist der Aufwand für die Herstellung dicker Glasschichten verhältnismäßig groß.

Aufgabe der vorliegenden Erfindung ist es, die Möglichkeiten zur Herstellung eines Spiegels der eingangs genannten Art zu erweitern.

Diese Aufgabe wird erfindungsgemäß von einem Spiegel nach Anspruch 1 sowie einem Herstellungsverfahren nach Anspruch 9 gelöst.

Ein wesentlicher Gedanke der vorliegenden Erfindung liegt in der Kombination einer lichtdurchlässigen Filterschicht zur Ausfilterung störender Anteile des in die Filterschicht eintretenden Lichts im gelben Spektralbereich mit einem Interferenzreflektor, wobei der Interferenzreflektor eine Mehrzahl dünner Schichten zur Reflexion des auf den Spiegel auftreffenden Lichts aufweist und wobei der Reflexionsgrad des Interferenzreflektors im gelben Spektralbereich geringer ist als in einem daran angrenzenden Wellenlängenbereich mit kleineren Wellenlängen. Bevorzugtermaßen ist der Reflexionsgrad des Interferenzreflektors im gelben Spektralbereich geringer als im gesamten grünen Spektralbereich.

Bei einer möglichen Ausführungsform hat der Interferenzreflektor im Wellenlängenbereich von 450 bis 550 nm, insbesondere zwischen 480 und 520 nm, ein Reflexionsgrad-Maximum und nimmt der Reflexionsgrad ab dem Maximum bis über den gelben Spektralbereich hinaus ab. Dies kann beispielsweise durch geeignete Abstimmung und Auswahl der Anzahl und/oder der Materialien und/oder der Schichtdicken der dünnen Schichten des Interferenzreflektors erreicht werden. Als dünn werden die Schichten insbesondere dann betrachtet, wenn das auf den Interferenzreflektor auftreffende Licht wegen der geringen Schichtdicke nur zu einem vernachlässigbar kleinen Anteil absorbiert wird, so daß die Summe des Reflexionsgrades und des Transmissionsgrades für jede Wellenlänge des sichtbaren Lichts annähernd 1 ergibt. Derartige Interferenzschichten haben typischerweise eine Schichtdicke, die deutlich kleiner als die Wellenlänge des sichtbaren Lichts ist. Beispielsweise beträgt die optische Dikke zumindest einer der Interferenzschichten ein Viertel einer Wellenlänge von Licht im Bereich 460 bis 540 nm, insbesondere ein Viertel der Wellenlänge, bei der das Reflexionsgrad-Maximum liegt. Solche Schichten können mit an sich bekannten Verfahren wie Sputterverfahren oder thermischen Verdampfungsverfahren gut reproduzierbar und bei gleichmäßiger Schichtdicke auf einem Substrat abgeschieden werden.

Ein Vorteil der vorliegenden Erfindung besteht darin, daß die angestrebte Extinktion der störenden Anteile im gelben Spektralbereich nicht allein durch eine Absorption in der Filterschicht erreicht werden muß. Vielmehr trägt der Interferenzreflektor dadurch zu einem auch unter schlechten Lichtverhältnissen gut wahrnehmbaren Spiegelbild bei, daß er selektiv reflektiert. Dadurch kann die Schichtdicke der Filterschicht im Vergleich zu der in US 5,844,721 beschriebenen Glasschicht reduziert werden. Bei einer bevorzugten Ausführungsform hat die Filterschicht daher eine Schichtdicke von weniger als 0,5 mm. Insbesondere wenn die Filterschicht eine Glasschicht ist, reduziert sich daher der Herstellungsaufwand. Dünne Glasschichten sind im Gegensatz zu dicken Glasschichten mit gängigen Laserwerkzeugen schneidbar. Auch kann bei lasergeschnittenen Glasschichten ein sonst erforderliches Facettieren des Randes entfallen, da die Schnittkannten entsprechend ausgeführt werden können. Zudem werden zunächst plane Spiegelschichten häufig im weiteren Verlauf des Herstellungsprozesses verformt, um einen Spiegel mit gekrümmter Oberfläche herzustellen. Das Verformen von dünnen Glasschichten erfordert wesentlich weniger Energie und geringeren Aufwand. Beispielsweise kann eine dünne Glasschicht so gebogen werden, daß sie sich der Kontur einer für das Verformen verwendeten, einseitig angrenzenden Form anpaßt. Die Form kann dazu genutzt werden, die Glasschicht zu erwärmen. Nach dem Abkühlen behält die Glasschicht dann ihre Krümmung bei.

Die Erfindung ist jedoch nicht auf die Verwendung von Glasschichten als Filterschichten beschränkt. Beispielsweise kann alternativ oder zusätzlich ein durchsichtiger Kunststoff, etwa ein geeigneter Siliconkautschuk als Basismaterial für die Filterschicht verwendet werden. Der Kunststoff kann außer der Ausfilterung der störenden Lichtanteile noch weitere Funktionen des Spiegels übernehmen, beispielsweise das Halten weiterer Spiegelschichten oder das Verbinden von Materialien an gegenüberliegenden Seiten der Kunststoffschicht und/oder das Abdichten gegen ein Eindringen von Luft und/oder Feuchtigkeit.

Bei einer Weiterbildung weist der Spiegel eine Absorptionsschicht zur Absorption von durch den Interferenzreflektor hindurchgetretenem Licht auf, wobei die Absorptionsschicht im sichtbaren Wellenlängenbereich einen mittleren Reflexionsgrad von weniger als 0,08, insbesondere 0,03 bis 0,05, hat. Die Absorptionsschicht absorbiert daher den größten Anteil des auftreffenden Lichts und verhindert weitestgehend eine Reflexion des nicht von dem Interferenzreflektor reflektierten gelben Lichts. Insbesondere wenn der Reflexionsgrad des Interferenzreflektors im Wellenlängenbereich des grünen und/oder roten Lichts deutlich kleiner als 1 ist, trägt die Absorptionsschicht durch die Absorption von rotem bzw. grünem Licht dazu bei, daß ein Betrachter des Spiegels ein gut wahrnehmbares Bild erhält. Würden nämlich diese Anteile reflektiert, könnten sich für den Betrachter bei gerichteter Reflexion unscharfe Konturen und/oder Mehrfachkonturen ergeben. Bei diffuser Reflexion wäre der Kontrast des von dem Interferenzreflektor reflektierten Lichts im Vergleich zu dem im Hintergrund reflektierten Licht nicht ausreichend groß.

Insbesondere hat der Interferenzreflektor nur drei dünne Schichten, zum Beispiel eine mittlere Schicht, die zwischen zwei äußere Schichten eingebettet ist, wobei die äußeren Schichten einen höheren Brechungsindex haben als die eingebettete mittlere Schicht. Die mittlere Schicht kann eine Siliziumoxidschicht sein, insbesondere mit SiO₂. Zwar bestehen bei der Verwendung von nur drei dünnen Schichten nicht dieselben Gestaltungsmöglichkeiten des Reflexionsverhaltens wie bei der Verwendung von mehr Schichten. Auf Grund der Absorptionsschicht ist jedoch der Kontrast auch bei den typischerweise mit drei Schichten erreichbaren Reflexionsgraden deutlich kleiner als 1 ausreichend groß.

Bei einer besonders bevorzugten Weiterbildung weist der Spiegel eine Beleuchtungseinrichtung auf, durch die der von der Kombination aus der Filterschicht mit dem Interferenzreflektor definierte Spiegelhintergrund beleuchtbar ist, so daß von der Beleuchtungseinrichtung erzeugtes Licht aus der Spiegeloberfläche austritt. Vorzugsweise weist der Spiegel eine Steuerungseinrichtung zur Steuerung der Leuchtstärke der Beleuchtungseinrichtung auf. So kann der Kontrast des von dem Interferenzreflektor reflektierten Lichts zu dem aus dem Spiegelhintergrund kommenden Licht verändert werden. Die Wirkung auf einen Betrachter des Spiegels ist vergleichbar mit einer Veränderung der Intensität des von dem Interferenzreflektor reflektierten Lichts. Dieser Dimmeffekt kann daher dazu genutzt werden, die Blendwirkung von intensivem, auf die Spiegeloberfläche auftreffendem Licht zu reduzieren. Beispielsweise wird das intensive Licht detektiert und der Kontrast dann verringert. Insbesondere beim Einsatz im Straßenverkehr kann der Spiegel daher die Fahrsicherheit erhöhen.

Vorzugsweise ist die oben beschriebene Absorptionsschicht in Kombination mit der Beleuchtungseinrichtung vorgesehen, wobei der Lichtaustritt der Beleuchtungseinrichtung von der Spiegeloberfläche ausgesehen hinter der Absorptionsschicht angeordnet ist und die Absorptionsschicht zumindest für einen geringen Anteil des von der Beleuchtung Einrichtung erzeugten Lichts durchlässig ist. Insbesondere beträgt im sichtbaren Wellenlängenbereich der Transmissionsgrad mehr als 0,1, vorzugsweise mehr als 0,25.

Die Erfindung wird nun anhand der beigefügten Zeichnung beispielhaft näher erläutert. Sie ist jedoch nicht auf die beschriebenen Beispiele und Ausführungsformen beschränkt. Die einzelnen Figuren der Zeichnung zeigen:
- Fig. 1 bis Fig. 4: verschiedene Kombinationen von Spiegelschichten,
- Fig. 5: eine mehrschichtige Beleuchtungseinrichtung,
- Fig. 6: den Transmissionsgrad einer Filterschicht und den Reflexionsgrad eines Interferenzreflektors als Funktion der Wellenlänge,
- Fig. 7: eine Beleuchtungseinrichtung und
- Fig. 8: die Beleuchtungseinrichtung gemäß Fig. 7 in Schnittdarstellung.

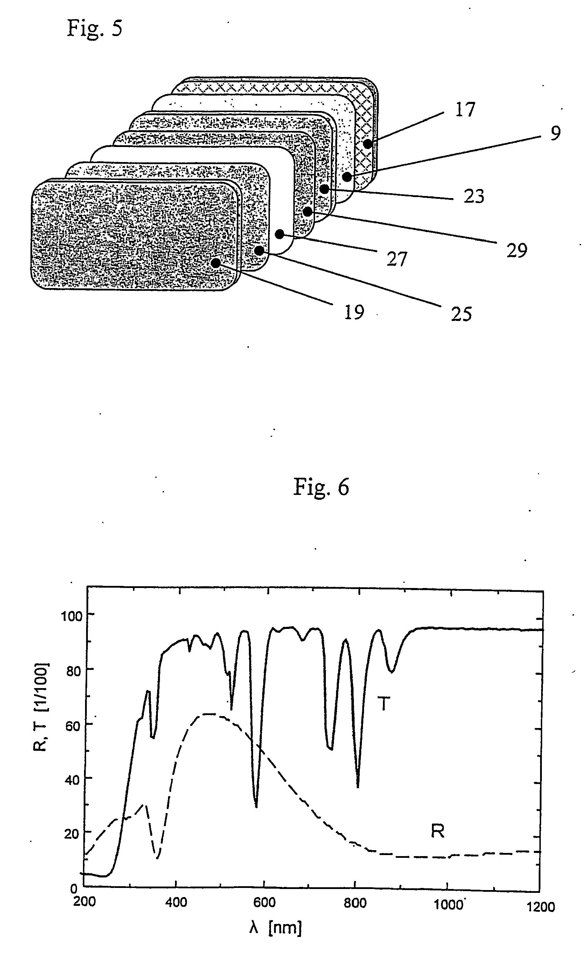

Figur 6 zeigt den Transmissionsgrad T einer mit Neodymoxid dotierten Glasschicht mit einer Schichtdicke von 0,5 mm. Das Neodymoxid ist bei einem Gewichtsanteil von 10 Prozent gleichmäßig in der Glasschicht verteilt. Man erkennt deutlich den Effekt der Absorption des Neodyms im gelben Spektralbereich (ca. 568 bis 590 nm Wellenlänge), in dem der Transmissionsgrad bis auf etwa 0,3 zurückgeht. Weiterhin zeigt die gestrichelte Linie in Figur 6 den Reflexionsgrad R eines Interferenzreflektors, der eine zwischen zwei Titanoxidschichten eingebettete Siliziumoxidschichten aufweist. Die Schichtdicke der beiden Titanoxidschichten beträgt ca. 50 nm, bei einem Brechungsindex von ca. 2,4. Die Schichtdicke der Siliziumoxidschicht beträgt ca. 22 nm, bei einem Berechnungsindex von ca. 1,5. der Reflexionsgrad hat bei einer Wellenlänge von ca. 480 nm ein Maximum von etwa 0,63. Ausgehend von diesem Maximum nimmt der Reflexionsgrad mit zunehmender Wellenlänge kontinuierlich bis über den gelben Wellenlängenbereich hinaus ab.

Alternativ hat der Interferenzreflektor, der für die Ausführung eines erfindungsgemäßen Spiegels verwendbar ist, eine zwischen zwei aüßere Schichten eingebettete SiO₂-Schich mit anderer, insbesondere größerer Schichtdicke als 22 nm.

Durch Wahl der Dicke der SiO₂-Schicht kann die Lage des Reflexionsgrad-Maximums des Interferenzreflektors eingestellt werden. Je größer die Schichtdicke ist, desto größer ist die Wellenlänge, bei der das Maximum liegt, wobei die genaue Lage des Maximums nur für einen bestimmten Weg gültig ist, den Licht in dem Interferenzreflektor zurücklegt, bzw. nur für eine Einfallsrichtung gültig ist, z. B. für Licht, das senkrcht auf die Oberfläche des Interferenzreflektors auftrifft. Die oben, im Zusammenhang mit Fig. 6 genannten Werte sind auf senkrechten Einfall des Lichts bezogen.

Die beiden Schichten, die die SiO₂-Schicht oder eine andere geeignete Schicht einbetten, haben vorzugsweise einen deutlich größeren Brechungsindex als die eingebettete Schicht, z. B. einen mindestens um 0,5 größeren Brechungsindex. Die einbettenden Schichten bestehen bevorzugtermaßen beide aus demselben Material und haben die gleiche Dicke. Das Material kann ein Oxid aufweisen. Es kann ein metallisches oder dielektrisches Verhalten zeigen.

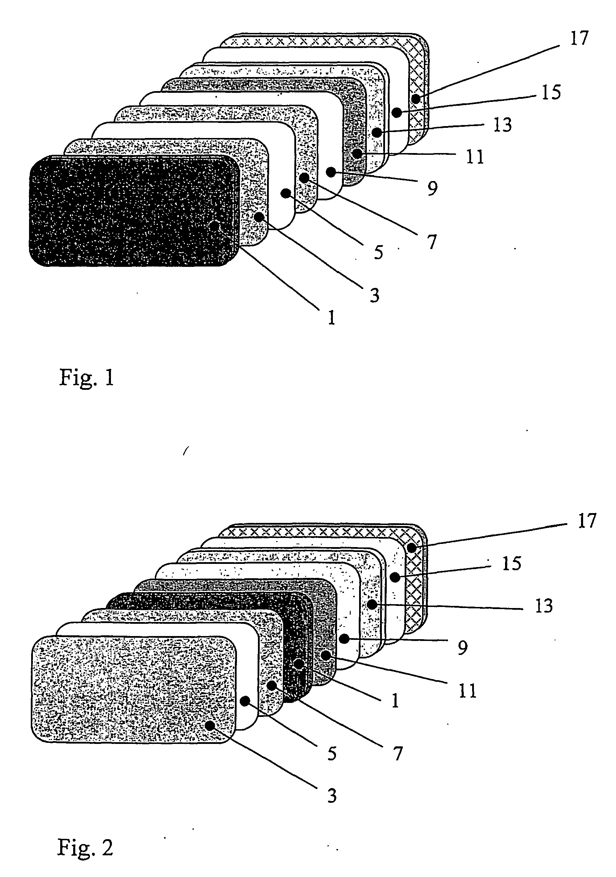

In Fig. 1 bis 5 bezeichnen gleiche Bezugszeichen Schichten, die aus dem gleichen Material hergestellt werden können.

Fig. 1 zeigt in Explosionsdarstellung den Aufbau einer bevorzugten Ausführungsform eines Spiegels. Eine Schicht Neodym enthaltenden Glases 1 (kurz: Nd-Glas) bildet die Spiegeloberfläche, auf die das zu reflektierende Lichts auftrifft und aus der reflektiertes Licht austritt. Vorzugsweise ist das Neodym in Verbindung mit Sauerstoff als Nd₂O₃ in der Glasschicht 1 gleichmäßig verteilt. Insbesondere hat die Glasschicht 1 eine Schichtdicke im Bereich 0,25 bis 0,35 mm. Angrenzend an die Glasschicht 1 ist ein Interferenzreflektor mit drei Teilschichten 3, 5, 7 vorgesehen. Die Schicht 5 besteht aus SiO₂. Die Schichten 3, 7 bestehen aus TiO₂. Der Interferenzreflektor hat insbesondere die im Zusammenhang mit Figur 6 beschriebenen Eigenschaften. Über eine Schicht 9 ist der Interferenzreflektor mit einer Absorptionsschicht 11 verbunden. Die Schicht 9 besteht aus einem durchsichtigen Siliconkautschuk. Von der Spiegeloberfläche aus gesehen hinter der Absorptionsschicht 11 ist eine Hintergrundbeleuchtung 13 angeordnet, die vorzugsweise in der Lage ist, Licht gleichmäßig über den von der Glasschicht 1, von dem Interferenzreflektor und von der Schicht 9 definierten Hintergrund verteilt in Richtung Spiegeloberfläche zu emittieren. An die Rückseite der Hintergrundbeleuchtung 13 grenzt eine zweite Siliconkautschuk-Schicht 15 an. Wiederum dahinter befindet sich eine Trägerplatte 17, vorzugsweise mit einer Heizungseinrichtung zur Heizung des Spiegels.

Insbesondere sind die Siliconkautschuk-Schichten aus SilGel 612 der Wacker-Chemie GmbH, München, Deutschland hergestellt. SilGel 612 hat die Eigenschaft, sehr gut an einer Vielzahl von Materialien zu haften, insbesondere an Glas. Es kann daher dazu verwendet werden, die anderen Schichten haltbar und dauerhaft mit der Trägerplatte 17 zu verbinden. Die Absorptionsschicht 11 wird vorzugsweise bereits vor dem Zusammensetzen der einzelnen Spiegelschichten auf der Hintergrundbeleuchtung 13 aufgebracht. Die Schichten 3, 5, 7 des Interferenzreflektors werden vorzugsweise ebenfalls vor dem Zusammensetzen auf der Glasschicht 1 aufgebracht.

Beim Gebrauch eines Spiegels gemäß Fig. 1 trifft das zu reflektierende Licht auf die durch die Glasschicht 1 gebildete Oberfläche auf. Beim Hindurchtreten durch die Glasschicht 1 wird der gelbe Anteil zu einem hohen Prozentsatz, beispielsweise zu mehr als 60 Prozent, von dem Neodym absorbiert. Das gefilterte Licht trifft auf den Interferenzreflektor und wird spektral selektiv reflektiert. Der reflektierte Anteil im gelben Spektralbereich ist geringer als im grünen und/oder roten Spektralbereich. Das reflektierte Licht tritt wiederum durch die Glasschicht 1 hindurch, wobei der Anteil des gelben Lichts weiter reduziert wird. Das nicht von dem Interferenzreflektor reflektierte Licht tritt in die Schicht 9 ein, tritt teilweise durch die Schicht 9 hindurch und wird größtenteils von der Absorptionsschicht 11 absorbiert. Nur ein vernachlässigbar kleiner Prozentsatz des ursprünglich auf den Spiegel auftreffenden Lichts wird von der Absorptionsschicht 11 reflektiert und tritt wieder an der Spiegeloberfläche aus dem Spiegel aus.

Zur Kontrastminderung kann die Hintergrundbeleuchtung 13 Licht emittieren, welches zu vorzugsweise mehr als 25 Prozent durch die Absorptionsschicht 11 in Richtung Spiegeloberfläche hindurchtritt. Auch dieses Licht trifft auf den Interferenzreflektor und muß die Glasschicht 1 passieren, bevor es an der Spiegeloberfläche austreten kann. Daher wird ein etwaig vorhandener gelber Anteil des emittierten Lichts wirksam reduziert. Vorzugsweise ist jedoch die Hintergrundbeleuchtung 13 bereits so konzipiert, daß der Anteil des gelben Lichts gering ist oder vernachlässigbar klein ist. Eine zusätzliche oder alternative Möglichkeit besteht darin, die optischen Eigenschaften der Absorptionsschicht 11 und/oder der ersten Siliconkautschuk-Schicht 9 so auszulegen, daß der gelbe Anteil bereits vor dem Auftreffen auf den Interferenzreflektor reduziert wird.

Bei möglichen Varianten des in Fig. 1 dargestellten Spiegels ist keine separate Absorptionsschicht 11 vorgesehen, sondern ist die erste Siliconkautschuk-Schicht 9 und/oder die Hintergrundbeleuchtung 13 so ausgestaltet, daß Licht in der beschriebenen Weise absorbiert wird bzw. hindurchtreten kann.

Fig. 2 zeigt eine Variante, bei der die Glasschicht 1 aus Nd-Glas von der Spiegeloberfläche aus gesehen hinter dem Interferenzreflektor angeordnet ist. Die Wirksamkeit dieser Variante im Hinblick auf das Ausfiltern gelben Lichts beruht darauf, daß die Schichten 3, 5, 7 des Interferenzreflektors eine Schichtdicke haben, die deutlich kleiner als die Wellenlänge sichtbaren Lichts ist. Daher tritt auch das auf die Spiegeloberfläche aufgetroffene, von dem Interferenzreflektor reflektierte Licht mit einer gewissen Eindringtiefe in die Glasschicht 1 ein und wird gefiltert.

Ein weiterer Unterschied gegenüber der Ausführungsform nach Fig. 1 besteht darin, daß die Absorptionsschicht 11 vor dem Zusammensetzen der Spiegelschichten auf die Glasschicht 1 aufgebracht wird und die Siliconkautschuk-Schicht 9 zwischen der Absorptionsschicht 11 und der Hintergrundbeleuchtung 13 angeordnet wird.

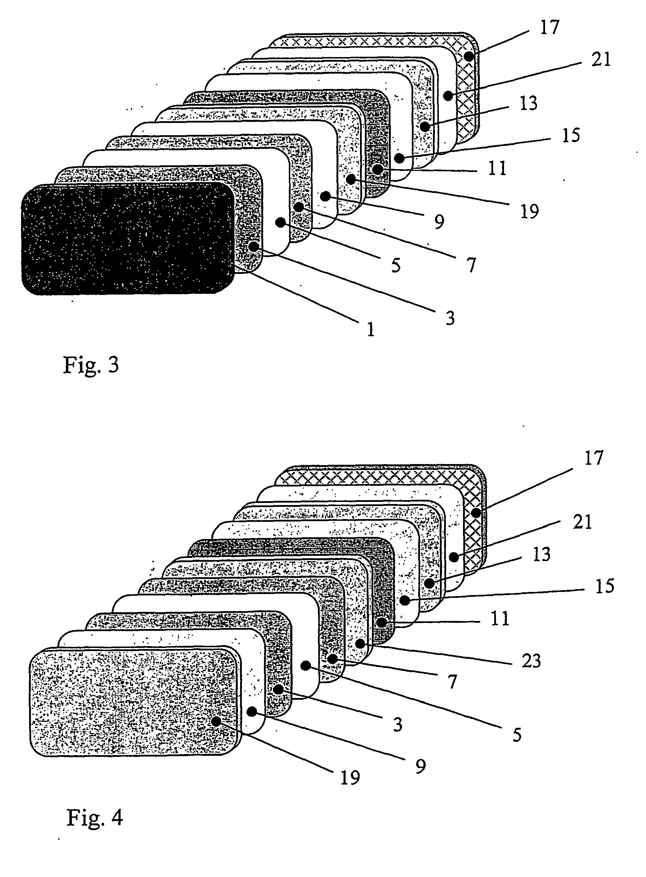

Bei der in Fig. 3 dargestellten Ausführungsform ist im Vergleich zu der in Fig. 1 dargestellten Ausführungsform eine zusätzliche Glasschicht 19 zwischen der ersten Siliconkautschuk-Schicht 9 und der Absorptionsschicht 11 vorgesehen. Die Glasschicht 19 hat beispielsweise eine Schichtdicke von 0,3 mm und trägt die Absorptionsschicht 11. Die Kombination der Schichten 19, 11 ist an beiden Seiten über je eine Siliconkautschuk-Schicht 9 bzw. 15 mit benachbarten Schichten verbunden. Eine dritte Siliconkautschuk-Schicht 21 ist zwischen der Trägerplatte 17 und der Hintergrundbeleuchtung 13 angeordnet.

Bei der Variante gemäß Fig. 4 ist die an der Spiegeloberfläche gelegene Glasschicht aus Nd-Glas durch eine Kombination aus einer Glasschicht 19 mit einer Neodym-dotierten Siliconkautschuk-Schicht 9 ersetzt. Die Glasschicht 19 bildet eine kratzfeste Oberflächenschicht des Spiegels. Die Siliconkautschuk-Schicht 9 wird insbesondere nach dem folgenden Verfahren hergestellt:

Neodym oder eine Neodym-Verbindung wird in einem Lösungsmittel aufgelöst, welches mit einem niederviskosen Siliconöl mischbar ist. Als Lösungsmittel geeignet ist beispielsweise Acetylaceton (2,4-Pentandion, Acetoaceton, Diacetylmethan, Summenformel: C₅H₈O₂). Darin lösliche Neodym-Verbindung sind zum Beispiel Tris (Cyclopentadienyl) Neodymium (III) (Summenformel: (C₅H₅)₃Nd und Neodymium (III) 2,4 Pentanedionate (Formel: Nd(CH₃COCHCOCH₃)₃). Die Nd-Lösung wird dann mit dem niederviskosen Siliconöl gemischt, und die Mischung wird der Komponente A des SilGel 612 zugesetzt. Die Komponente A wird dann mit der Komponente B gemischt, so daß das SilGel 612 mit darin verteiltem Neodym gebildet wird.

Fig. 5 zeigt den Schichtaufbau einer Hintergrundbeleuchtung, beispielsweise der Hintergrundbeleuchtung 13 der Fig. 1 bis Fig. 4. Sie ist zwischen zwei Glasschichten 19, 23 angeordnet. Eine erste Elektrode, die Anode 25 besteht beispielsweise aus Indium-Zinnoxid und ist so dünn ausgeführt, daß von der Hintergrundbeleuchtung erzeugtes Licht durch die Anode 25 hindurchtreten kann. Von der Glasschicht 19 aus gesehen hinter der Anode 25 folgt eine Schicht 27 mit einem Licht emittierenden Polymer und wiederum dahinter eine zweite Elektrode, die Kathode 29. Die Hintergrundbeleuchtung kann beispielsweise weitere Teilschichten aufweisen, wie in dem Artikel "Folien, die leuchten", veröffentlicht auf den Seiten 22 bis 26 in der Zeitschrift RESEARCH der Bayer AG, Leverkusen, Deutschland, erschienen im Oktober 1999, ISSN 0179-8618, beschrieben. Derartige Leuchtdioden haben den Vorteil, daß sie aus biegbaren Materialien bestehen und sehr dünn ausgeführt werden können. Sie sind damit gut für Spiegel mit gekrümmter Spiegeloberfläche geeignet.

Grundsätzlich kommen alle aus der Display- und Flachbildschirm-Technologien bekannten Hintergrundbeleuchtungen für den Spiegel in Frage. Insbesondere geeignet sind Leuchtfolien mit elektrolumineszenten Materialien, wie sie beispielsweise von DuPont Electronic Materials unter der Marke Luxprint angeboten werden. Diese Leuchtfolien weisen zwischen einer transparenten, für den Lichtaustritt geeigneten Schutzfolie und einer zweiten Schutzfolie einen Sandwich-artigen Aufbau auf: eine Kathodenschicht aus Silber- oder Carbon-Paste grenzt an die zweite Schutzfolie an. Eine lichtdurchlässige Anodenschicht, beispielsweise aus Indium-Zinnoxid grenzt an die transparente Schutzfolien an. Dazwischen liegen noch eine dielektrische Schicht und eine elektrolumineszente Schicht, welche eine elektrolumineszente Tinte aufweist. Die Tinte kann beispielsweise so gewählt werden, daß die Leuchtfolie blaues oder weißes Licht emittiert. Die Schutzfolien sind insbesondere Polyesterfolien. Die Leuchtfolien sind flexibel und können sich daher den gekrümmten Oberflächen benachbarter Spiegelschichten anpassen. Sie können beispielsweise unter Verwendung von SilGel 612 oder einem anderen Siliconkautschuk mit weiteren Spiegelschichten verklebt werden.

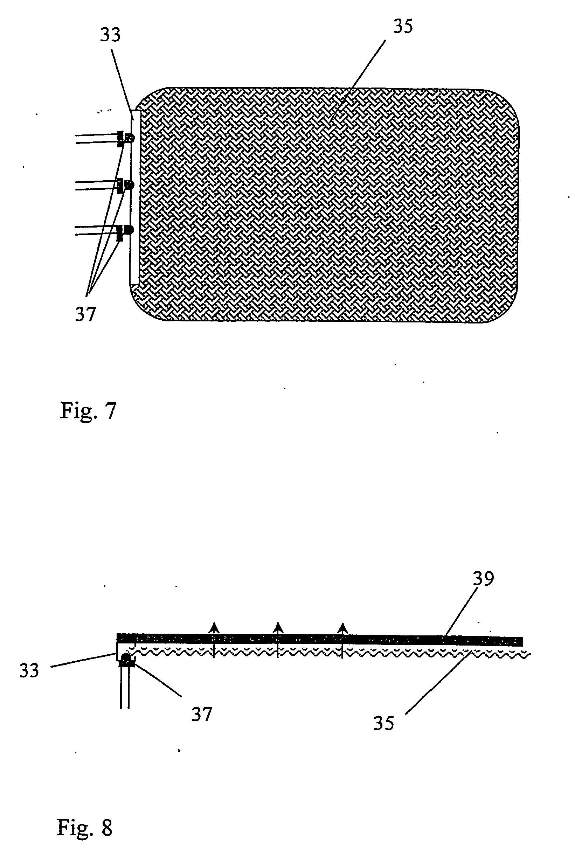

Als eine weitere Variante einer Hintergrundbeleuchtung wird eine Anordnung vorgeschlagen, die anhand der Figuren 7 und 8 näher beschrieben wird. Als Lichtquelle dienen eine Mehrzahl von Leuchtdioden 37, die in den Figuren bezüglich ihrer Lage, Anzahl und Größe nur schematisch dargestellt sind. Das von den Leuchtdioden 37 emittierte Licht wird in eine Lichtführung 33 eingekoppelt, die das Licht entlang einem Rand eines Lichtverteilers 35 leitet und über den Rand verteilt in den Lichtverteiler 35 einkoppelt. Der Lichtverteiler 35 verteilt das eingekoppelte Licht über seine gesamte Querschnittsfläche und läßt es verteilt über die Querschnittsfläche an seiner Oberfläche austreten. Um dies zu ermöglichen, weist der Lichtverteiler 35 eine strukturierte Oberfläche auf, mit etwa gleichmäßig über die Oberfläche verteilten, in schmalen Kanten gipfelnden Erhebungen. Die Wirkungsweise der Leitung von Licht innerhalb des Lichtverteilers 35 und des Austritts von Licht aus dem Lichtverteiler 35 ist vergleichbar mit den Verhältnissen in stark gebogenen oder geknickten Glasfasern. Trifft das innerhalb des Materials geleitete Licht unter einem großen Winkel gegen die Oberflächennormale von innen auf die Oberfläche, dann wird das Licht totalreflektiert. Trifft das Licht dagegen unter einem kleineren Winkel als dem Grenzwinkel der Totalreflexion auf die Oberfläche, dann kann es austreten. Ein Beispiel für die Oberflächenstruktur ist in den Figuren 7 und 8 schematisch dargestellt. Der Lichtverteiler 35 ist beispielsweise aus Polycarbonat oder aus einem lichtsammelnden Werkstoff, beispielsweise zu beziehen über die Bayer AG, Leverkusen, Deutschland, hergestellt. Insbesondere kann der Lichtverteiler im Spritzgußverfahren hergestellt werden und weist eine Dicke von weniger als 0,25 mm auf. Die Oberflächenstruktur wird vorzugsweise als Mikrostruktur ausgeführt. Hierzu können beispielsweise Herstellungsverfahren, wie sie für die Herstellung von Compact Discs zur Speicherung von digitaler Information bekannt sind, angewendet werden.

Wie bereits oben kurz beschrieben wurde, gibt es verschiedene Möglichkeiten der Ausführung einer Absorptionsschicht, die die Funktion der Absorptionsschicht 11 in den Figuren 1 bis 4 ausüben kann. Es kann sich um eine allein der Absorption von Licht dienende Schicht handeln, oder die Absorptionsschicht kann auch noch weitere Funktionen erfüllen, beispielsweise angrenzende Schichten zusammenkleben oder insbesondere während der Herstellung des Spiegels eine oder mehrere benachbarte Schichten vor Beschädigung schützen, wie es bei den Schutzfolien der oben beschriebenen elektrolumineszenten Leuchtfolien der Fall ist. Insbesondere kann die transparente Schutzfolie die Absorptionsschicht sein oder eine zusätzliche Absorptionsschicht, etwa eine Lackschicht, tragen. Weiterhin kann auf einem Substrat, wie beispielsweise die Glasschicht 1 von Fig. 2, eine Chromoxidschicht aufgebracht werden, insbesondere im Vakuum aufgedampft werden. Wird eine Siliconkautschuk-Schicht, etwa die Schicht 9 in Fig. 1, als Absorptionsschicht ausgeführt, so wird bevorzugtermaßen das folgende Verfahren zur Herstellung angewendet:

Ein fettlöslicher Farbstoff wird in einem niederviskosen Siliconöl gelöst, zum Beispiel in dem Siliconöl mit der Bezeichnung AK 35 der Wacker-Chemie GmbH, München. Das auf diese Weise transparent eingefärbte Silicon wird der Komponente A des SilGel 612 zugemischt. Nach dem Mischen der Komponente A mit der Komponente B kann das eingefärbte SilGel 612 als Absorptionsschicht verwendet werden.

## Patentansprüche

1. Spiegel, insbesondere Fahrzeugrückspiegel, mit:
einer lichtdurchlässigen Filterschicht (1; 9) zur Ausfilterung störender Anteile des in die Filterschicht (1; 9) eintretenden Lichts im gelben Spektralbereich, wobei die Filterschicht (1; 9) einen darin verteilten Stoff enthält, der eine Extinktion der störenden Anteile bewirkt und wobei die Filterschicht (1; 9) derart angeordnet ist, daß sie im Strahlengang des auf den Spiegel auftreffenden, zu reflektierenden Lichts liegt,
**gekennzeichnet durch**
einen Interferenzreflektor (3, 5, 7) mit einer Mehrzahl dünner Schichten (3, 5, 7) zur Reflexion des auf den Spiegel auftreffenden Lichts, wobei der Reflexionsgrad des Interferenzreflektors (3, 5, 7) im gelben Spektralbereich geringer ist als in einem daran angrenzenden Wellenlängenbereich mit kleineren Wellenlängen.

2. Spiegel nach Anspruch 1,
wobei der Interferenzreflektor (3, 5, 7) im Wellenlängenbereich von 450 bis 550 nm, insbesondere zwischen 480 und 520 nm, ein Reflexionsgrad-Maximum hat und der Reflexionsgrad ab dem Maximum bis über den gelben Spektralbereich hinaus abnimmt.

3. Spiegel nach Anspruch 1 oder 2,
wobei der Interferenzreflektor (3, 5, 7) eine Siliziumoxidschicht (5) und zwei die Siliziumoxidschicht (5) einbettende Schichten (3, 7) mit größerem Brechungsindex als die Siliziumoxidschicht (5) aufweist und wobei die drei Schichten (3, 5, 7) so ausgewählt und aufeinander abgestimmt sind, daß der Reflexionsgrad des Interferenzreflektors (3, 5, 7) im gelben Spektralbereich geringer ist als in einem daran angrenzenden Wellenlängenbereich mit kleineren Wellenlängen.

4. Spiegel nach einem Ansprüche 1 bis 3,
wobei die Filterschicht (1; 9) eine Schichtdicke von weniger als 0,5 mm, insbesondere eine Schichtdicke im Bereich von 0,25 bis 0,35 mm, hat.

5. Spiegel nach einem Ansprüche 1 bis 4,
wobei die Filterschicht (9) aus einem Siliconkautschuk besteht, in dem der die Extinktion bewirkende Stoff verteilt ist.

6. Spiegel nach einem Ansprüche 1 bis 5,
wobei der Spiegel eine Absorptionsschicht (9; 11; 13) zur Absorption von durch den Interferenzreflektor (3, 5, 7) hindurchgetretenem Licht aufweist, die im sichtbaren Wellenlängenbereich einen mittleren Reflexionsgrad von weniger als 0,08 hat, insbesondere einen mittleren Reflexionsgrad im Bereich 0,03 bis 0,05.

7. Spiegel nach einem der Ansprüche 1 bis 6,
wobei der Spiegel eine Beleuchtungseinrichtung (13) aufweist, durch die der Spiegelhintergrund beleuchtbar ist, der von der Kombination der Filterschicht (1; 9) mit dem Interferenzreflektor (3, 5, 7) definiert wird, so daß von der Beleuchtungseinrichtung (13) erzeugtes Licht aus der Spiegeloberfläche austritt.

8. Spiegel nach Anspruch 6 und nach Anspruch 7,
wobei der Lichtaustritt der Beleuchtungseinrichtung (13) von der Spiegeloberfläche aus gesehen hinter der Absorptionsschicht (9, 11, 13) angeordnet ist und die Absorptionsschicht (9, 11, 13) im sichtbaren Wellenlängenbereich einen mittleren Transmissionsgrad von mehr als 0,1 hat, insbesondere mehr als 0,25.

9. Verfahren zum Herstellen eines Spiegels, insbesondere eines Spiegels nach einem der Ansprüche 1 bis 8, wobei eine lichtdurchlässige Filterschicht (1; 9) zur Ausfilterung störender Lichtanteile im gelben Spektralbereich mit.einem Interferenzreflektor (3, 5, 7) kombiniert wird, wobei der Interferenzreflektor (3, 5, 7) eine Mehrzahl dünner Schichten (3, 5, 7) zur Reflexion von Licht aufweist, und
wobei die dünnen Schichten (3, 5, 7) derart ausgewählt und aufeinander abgestimmt werden, daß der Reflexionsgrad des Interferenzreflektors (3, 5, 7) im gelben Spektralbereich mit zunehmender Wellenlänge abnimmt.

10. Verfahren nach Anspruch 9,
wobei zur Herstellung einer Schicht (9, 15) des Spiegels,
- ein optisch wirksamer Stoff mit einem Siliconöl gemischt wird,
- das Gemisch einer der Herstellung eines Mehrkomponenten-Siliconkautschuks dienenden ersten Komponente zugesetzt wird und
- die erste Komponente mit einer der Herstellung des Mehrkomponenten-Siliconkautschuks dienenden zweiten Komponente kombiniert wird,
so daß ein lichtdurchlässiger Siliconkautschuk mit dem darin verteilten optisch wirksamen Stoff gebildet wird.

## Claims

1. A mirror, especailly a rear mirror for a vehicle, comprising:
a light-transmitting filter layer (1; 9) for filtering interfering components in the yellow spectral region out of the light entering the filter layer (1; 9), wherein the filter layer (1; 9) contains a material distributed therein for extinguishing the interfering components and wherein the filter layer (1; 9) is positioned in the path of the incident light for reflecting by the mirror,
**characterised by**
an interference reflector (3, 5, 7) comprising a number of thin layers (3, 5, 7) for reflecting the light striking the mirror, wherein the reflection factor of the interference reflector (3, 5, 7) in the yellow spectral region is less than in an adjoining region with shorter wavelengths.

2. A mirror according to claim 1,
wherein the interference reflector (3, 5, 7) has a reflection-factor maximum in the wavelength region from 450 to 550 nm, especially between 480 and 520 nm, and the reflection factor decreases from the maximum up to and beyond the yellow spectral region.

3. A mirror according to claim 1 or claim 2,
wherein the interference reflector (3, 5, 7) is a silicon oxide layer (5) and comprises two layers (3, 7) which enclose and have a greater refractive index than the silicon oxide layer (5) and wherein the three layers (3, 5, 7) are selected and matched to one another so that the reflection factor of the interference reflector (3, 5, 7) in the yellow spectral region is lower than in an adjoining region with shorter wavelengths.

4. A mirror according to any of claims 1 to 3,
wherein the filter layer (1; 9) has a thickness less than 0.5 mm, especially a thickness in the range from 0.25 to 0.35 mm.

5. A mirror according to any of claims 1 to 4,
wherein the filter layer (9) is made of a silicone rubber in which the extinguishing material is distributed.

6. A mirror according to any of claims 1 to 5,
wherein the mirror has an absorption layer (9; 11; 13) for absorbing the light passing through the interference reflector (3, 5, 7) and having an average reflection factor of less than 0.08, especially an average reflection factor in the range from 0.03 to 0.05, in the visible wavelength region.

7. A mirror according to any of claims 1 to 6,
wherein the mirror has a lighting device (13) for lighting up the mirror background, defined by the filter layer (1; 9) in combination with the interference reflector (3, 5, 7), so that light generated by the lighting device (13) comes out of the mirror surface.

8. A mirror according to claim 6 and according to claim 7,
wherein the light exit of the lighting device (13), seen from the mirror surface, is disposed behind the absorption layer (9, 11, 13) and the absorption layer (9, 11, 13) has an average transmission factor of more than 0.1, especially more than 0.25, in the visible wavelength region.

9. A method of producing a mirror, especially a mirror according to any of claims 1 to 8,
wherein a light-transmitting filter layer (1; 9) for filtering out interfering light components in the yellow spectral region is combined with an interference reflector (3, 5, 7), wherein the interference reflector (3, 5, 7) comprises a number of thin layers (3, 5, 7) for reflecting light and wherein the thin layers (3, 5, 7) are selected and matched to one another so that the reflection factor of the interference reflector (3, 5, 7) in the narrow spectral region decreases with increasing wavelength.

10. A method according to claim 9,
wherein in order to produce a layer (9, 15) of the mirror
- an optically active substance is mixed with a silicone oil,
- the mixture is added to a first component for producing a multi-component silicone rubber and
- the first component is combined with a second component for producing the multi-component silicone rubber,
so as to form a light-transmitting silicone rubber containing the optically active substance distributed therein.

## Revendications

1. Miroir, en particulier rétroviseur de véhicule, comprenant :
une couche filtrante transparente (1 ; 9) destinée à filtrer les composantes parasites entrant dans la couche filtrante (1 ; 9) dans le domaine spectral jaune, sachant que la couche filtrante (1 ; 9) contient une substance entraînant une extinction des composantes parasites, la couche filtrante (1 ; 9) étant prévue sur la trajectoire des rayons de la lumière à réfléchir arrivant sur le miroir,
**caractérisé par**
un réflecteur d'interférence (3, 5, 7) présentant plusieurs couches fines (3, 5, 7) destinées à réfléchir la lumière arrivant sur le miroir, et ayant un facteur de réflexion plus faible dans le domaine spectral jaune, que dans le domaine spectral voisin avec des longueurs d'onde plus petites.

2. Miroir selon la revendication 1,
dans lequel le réflecteur d'interférence (3, 5, 7) présente dans le domaine spectral compris entre 450 et 550 nm, en particulier entre 480 et 520 nm, un maximum de facteur de réflexion, et le facteur de réflexion diminue à partir du maximum jusqu'au-delà du domaine spectral jaune.

3. Miroir selon la revendication 1 ou 2,
dans lequel le réflecteur d'interférence (3, 5, 7) présente une couche d'oxyde de silicium (5) et deux couches (3, 7) positionnées de chaque côté de la couche d'oxyde de silicium (5) et présentant un indice de réfraction supérieur à celui de la couche d'oxyde de silicium (5), et les trois couches (3, 5, 7) sont choisies et adaptées les unes aux autres de telle manière que le facteur de réflexion du réflecteur d'interférence (3, 5, 7) soit plus faible dans le domaine spectral jaune que dans un domaine spectral voisin avec de plus petites longueurs d'onde.

4. Miroir selon l'une des revendications 1 à 3,
sachant que la couche filtrante (1 ; 9) présente une épaisseur de moins de 0,5 mm, en particulier une épaisseur comprise entre 0,25 et 0,35 mm.

5. Miroir selon l'une des revendications 1 à 4,
dans lequel la couche filtrante (9) est composée d'un caoutchouc silicone contenant la substance provoquant l'extinction, répartie.

6. Miroir selon l'une des revendications 1 à 5,
dans lequel le miroir présente une couche d'absorption (9 ; 11 ; 13) de la lumière passant à travers le réflecteur d'interférence (3, 5, 7), qui présente, dans le domaine spectral visible, un facteur de réflexion moyen inférieur à 0,08, en particulier un facteur de réflexion compris entre 0,03 et 0,05.

7. Miroir selon l'une des revendications 1 à 6,
dans lequel le miroir présente un dispositif d'éclairage (13) illuminant le fond du miroir et défini par l'ensemble formé par la couche filtrante (1 ; 9) et le réflecteur d'interférence (3, 5, 7), si bien que la lumière produite par le dispositif d'éclairage (13) sort par le surface du miroir.

8. Miroir selon la revendication 6 ou 7,
dans lequel la sortie de lumière du dispositif d'éclairage (13) se fait, par rapport à la surface du miroir, derrière la couche d'absorption (9, 11, 13), et la couche d'absorption (9, 11, 13) présente dans le domaine spectral visible un facteur de transmission moyen supérieur à 0,1, en particulier de plus de 0,25.

9. Procédé pour la fabrication d'un miroir, en particulier d'un miroir selon l'une des revendications 1 à 8, selon lequel couche filtrante transparente (1 ; 9) destinée à filtrer les composantes parasites de la lumière dans le domaine spectral jaune est combinée à un réflecteur d'interférence (3, 5, 7), le réflecteur d'interférence (3, 5, 7) présente plusieurs fines couches (3, 5, 7) destinées à réfléchir la lumière, et les fines couches (3, 5, 7) sont choisies et adaptées les unes aux autres pour que le facteur de réflexion du réflecteur d'interférence (3, 5, 7) diminue dans le domaine spectral jaune avec une longueur d'onde croissante.

10. Procédé selon la revendication 9,
selon lequel pour la fabrication d'une couche (9, 15) du miroir,
- on mélange une substance optiquement active à une huile de silicone,
- le mélange est ajouté à un premier composant servant à la fabrication d'un caoutchouc silicone multicomposant, et
- le premier composant est mélangée à un second composant servant à la fabrication du caoutchouc silicone multicomposant, pour former un caoutchouc silicone transparent renfermant la substance optiquement active.
